# EUROPEAN PATENT APPLICATION

(11) **EP 3 367 540 A1**
(43) Date of publication of application: **29.08.2018**
(21) Application number: 18159246.0
(22) Date of filing: 28.02.2018
(51) Int. Cl.: H02K 1/20, H02K 1/27, H02K 1/32

(54) **MOTOR**

(30) Priority: 28.02.2017 JP 2017036121
(71) Applicant: Nidec Corporation, Kyoto-shi, Kyoto 601-8205 (JP)
(72) Inventor: SAKAUCHI, Akira, Minami-ku, Kyoto, 601-8205 (JP); SHIMIZU, Yasuaki, Minami-ku, Kyoto, 601-8205 (JP); KUWAHARA, Takeru, Minami-ku, Kyoto, 601-8205 (JP); NISHIMURA, Musashi, Minami-ku, Kyoto, 601-8205 (JP)
(74) Representative: Zimmermann, Tankred Klaus

(57) **Abstract**

An outer rotor motor (1) includes a stationary portion (2) provided with a stator (4) and a rotary portion (3) provided with a magnet portion (7). The rotary portion (3) is provided with a rotor (8). An N-pole region and (NR) an S-pole region (SR) of the magnet portion (7) are alternately arranged in a circumferential direction. The rotor (8) is provided with at least one of a recess portion (81) that is provided on an outer circumferential surface (8a) and that is recessed toward a radially inner side and a hole portion (82) that penetrates the rotor (8) in a direction from the outer circumferential surface (8a) to an inner circumferential surface (8b). The recess portion (81) and the hole portion (82) radially face the central portion (13) of the N-pole region (NR) or the central portion (13) of the S-pole region (SR).

## Description

### Field of the Invention

The present invention relates to a motor.

### Description of the Related Art

Japanese Unexamined Patent Application Publication No. 11-136886 discloses a permanent magnet type motor constituting an eversion structure. The permanent magnet type motor is provided with a stator attached to a stationary portion and a rotor that is provided to surround the stator. The rotor is configured of a rotor yoke that forms a magnetic circuit and a field magnet portion that is attached to an inner circumferential surface of a cylindrical portion of the rotor yoke and that faces the stator. The field magnet portion is configured such that two appropriately arc-shaped permanent magnet segments are held with a gap provided therebetween.

In the configuration disclosed in Japanese Unexamined Patent Application Publication No. 11-136886, the permanent magnet segments protrude downward in a rotation axis direction further than the rotor yoke. In this configuration, it is possible to reduce the weight of the motor in order to shorten a dimension of the rotor yoke in the rotation axis direction. However, since a portion of each permanent magnet segment that protrudes downward further than the rotor yoke does not face the rotor yoke in a radial direction, there is a possibility that the magnetic characteristics of the motor are influenced.

An object of the invention is to provide a technique with which it is possible to reduce an influence on magnetic characteristics and to reduce the weight of a motor.

### SUMMARY OF THE INVENTION

An exemplary motor in the invention is an outer rotor motor including a stationary portion and a rotary portion. The stationary portion is provided with a stator that annularly surrounds a central axis that extends in a vertical direction. The rotary portion is provided with a magnet portion that is disposed radially outward of the stator. The rotary portion is provided with a rotor that is a magnetic material with the magnet portion held on an inner circumferential surface side thereof. An N-pole region and an S-pole region of the magnet portion are alternately arranged in a circumferential direction. The rotor is provided with at least one of a recess portion that is provided on an outer circumferential surface and that is recessed toward a radially inner side and a hole portion that penetrates the rotor in a direction from the outer circumferential surface to an inner circumferential surface. The recess portion and the hole portion radially face a central portion of the N-pole region in the circumferential direction or a central portion of the S-pole region in the circumferential direction.

According to the present invention, it is possible to provide a technique with which it is possible to reduce an influence on magnetic characteristics and to reduce the weight of a motor.

The above and other elements, features, steps, characteristics and advantages of the present discloser will become more apparent from the following detailed description of the preferred embodiments with reference to the attached drawings.

### BRIEF DESCRIPTION OF THE DRAWINGS

Fig. 1 is a perspective view of a motor according to an embodiment of the invention;
Fig. 2 is a cross sectional view of the motor according to the embodiment of the invention;
Fig. 3 is a plan view illustrating a relationship between a stator core, a magnet portion, and a rotor of the motor according to the embodiment of the invention;
Fig. 4 is a schematic view for describing magnetic flux formed by magnetic pieces and coils;
Fig. 5 is a schematic view for describing weight reduction of the rotor according to the embodiment;
Fig. 6 is a schematic view for describing weight reduction of the stator core according to the embodiment;
Fig. 7 is a schematic view for describing a first modification example;
Fig. 8A is a schematic view for describing a second modification example; and
Fig. 8B is a schematic view for describing the second modification example.

### DETAILED DESCRIPTION OF THE PREFERRED EMBODIMENTS

Hereinafter, an exemplary embodiment of the invention will be described in detail with reference to drawings. Note that, in the specification, a direction parallel to a central axis C of a motor 1 will be referred to as an "axial direction", a direction orthogonal to the central axis C of the motor 1 will be referred to as a "radial direction", and a direction along an arc around the central axis C of the motor 1 will be referred to as a "circumferential direction". In addition, in the specification, the shape of each portion and the positional relationship will be described on an assumption that the axial direction is the vertical direction and a lid portion 9 is above a stator 4. However, the above-described definition of the vertical direction is not intended to limit the orientation of the motor 1 according to the invention at the time of use.

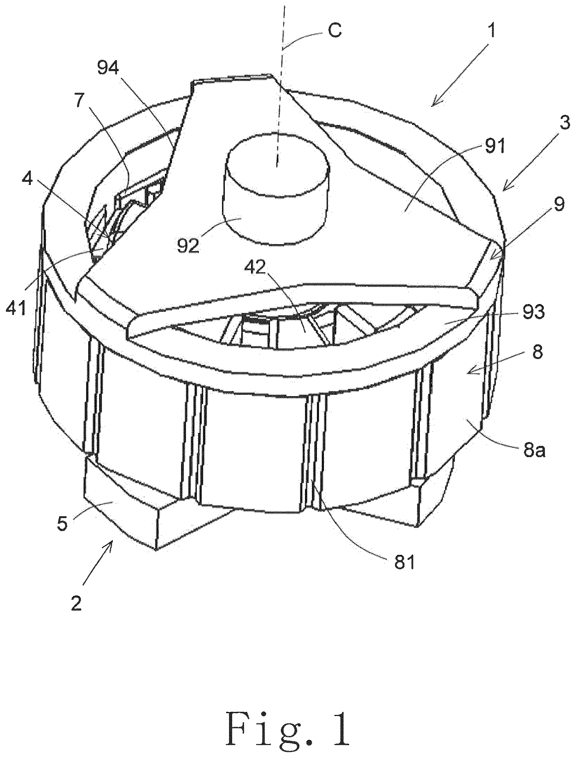

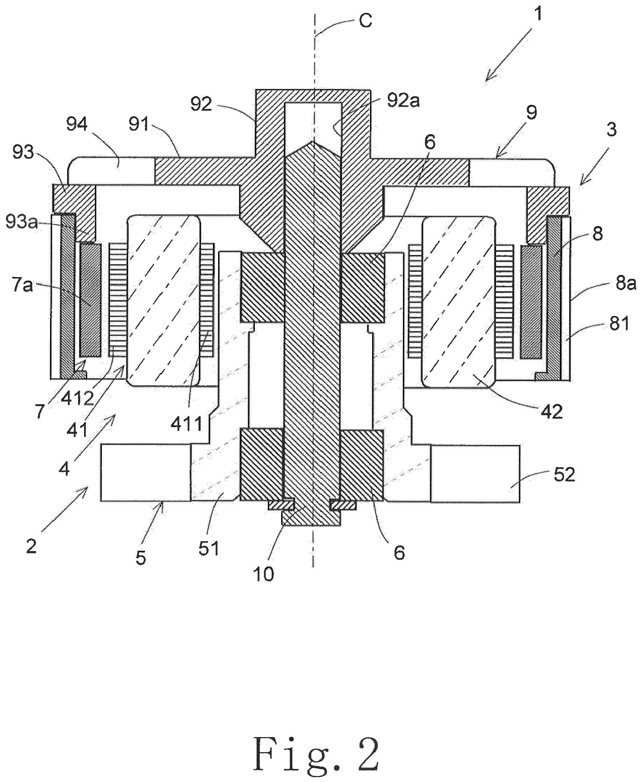

A motor in the exemplary embodiment of the invention will be described below. Fig. 1 is a perspective view of the motor 1 according to the embodiment of the invention. Fig. 2 is a cross sectional view of the motor 1 according to the embodiment of the invention. In the embodiment, the motor 1 is installed in a small unmanned aircraft (not shown) and rotates a rotary blade. Note that, the motor 1 may be used for a purpose other than the unmanned aircraft. For example, the motor 1 may be installed in a transportation machine such as an automobile or a train, OA equipment, medical equipment, an industrial tool, large-scale equipment for industrial use, or the like to generate various types of driving forces.

The motor 1 is provided with a stationary portion 2 and a rotary portion 3. The stationary portion 2 is fixed to a chassis or the like of the unmanned aircraft. The rotary portion 3 rotates around the central axis C. The stationary portion 2 is provided with the stator 4, a bracket 5, and bearing portions 6. The rotary portion 3 is provided with a magnet portion 7, a rotor 8, the lid portion 9, and a shaft 10.

The stationary portion 2 is provided with the stator 4. The stator 4 annularly surrounds the central axis C that extends in the vertical direction. The stator 4 is provided with a stator core 41. The stator core 41 is formed of a magnetic material. The magnetic material is preferably a ferrous material. For example, the magnetic material may be silicon steel. In the embodiment, the stator core 41 is configured of a stack of steel sheets obtained by stacking electromagnetic steel sheets in the axial direction. The stator core 41 is provided with an annular core back 411 and a plurality of salient poles 412. Note that, the stator core 41 may be formed by bonding a plurality of core pieces, each of which is provided with the salient pole 412 and the core back 411, to each other in the circumferential direction. The details of the stator core 41 will be described later.

On each salient pole 412, a lead wire is wound via an insulator (not shown) such that coils 42 are formed. That is, the stator 4 is provided with the plurality of coils 42. One end of a lead wire that is drawn out from each coil 42 is connected to a power source or a drive circuit that supplies power to the motor 1. In this manner, power is supplied to the coils 42.

The stationary portion 2 is provided with the bracket 5. The bracket 5 is provided with a tubular portion 51 that extends in the vertical direction. The bracket 5 is provided with a plurality of leg portions 52 that are disposed on a lower portion side of the tubular portion 51. The plurality of leg portions 52 extend in the radial direction from an outer circumferential surface of the tubular portion 51. The plurality of leg portions 52 are preferably arranged at equal intervals in the circumferential direction. The stator 4 is disposed radially outward of the tubular portion 51 and is supported by the tubular portion 51. In the embodiment, the tubular portion 51 is fixed to a radially inner portion of the stator core 41 in a press-fitting manner or in an adhesive manner. The plurality of leg portions 52 are fixed to the chassis or the like of the unmanned aircraft by means of a fixing tool such as a screw, for example.

The stationary portion 2 is provided with the bearing portions 6. In the embodiment, the stationary portion 2 is provided with two bearing portions 6 that are disposed with a vertical interval provided therebetween. The upper and lower bearing portions 6 are held in the tubular portion 51 in a state of being accommodated in the tubular portion 51. The upper bearing portion 6 is disposed radially inward of the core back 411. The lower bearing portion 6 is disposed radially inward of the plurality of leg portions 52. The upper and lower bearing portions 6 are configured as ball bearings. Note that, instead of a ball bearing, each of the upper and lower bearing portions 6 may be another type of bearing such as a slide bearing.

The rotary portion 3 is provided with the magnet portion 7. The magnet portion 7 is disposed radially outward of the stator 4. The magnet portion 7 is configured of a permanent magnet. In the embodiment, the magnet portion 7 is provided with a plurality of magnet pieces 7a. The plurality of magnet pieces 7a are arranged such that N-poles and S-poles are alternately arranged in the circumferential direction. The details of the magnet portion 7 will be described later.

Note that, instead of the plurality of magnet pieces 7a, the magnet portion 7 may be provided with a single annular magnet. However, the magnet portion 7 is preferably provided with the plurality of magnet pieces 7a. In this case, it is possible to reduce the weight of the magnet portion 7 in comparison with a case where the magnet portion 7 is configured of the single annular magnet and it is possible to reduce the weight of the motor 1. In a case where the magnet portion 7 is configured of the plurality of magnet pieces 7a, the shape of each magnet piece 7a can be made simple. For this reason, it is possible to manufacture the motor 1 at low cost.

The rotary portion 3 is provided with the rotor 8. The rotor 8 is a magnetic material with the magnet portion 7 held on an inner circumferential surface side thereof. The magnetic material is preferably a ferrous material. For example, the magnetic material may be carbon steel. The rotor 8 is formed by subjecting the magnetic material to processing such as cutting and pressing. The rotor 8 may be configured by stacking a plurality of magnetic steel sheets in the axial direction. The rotor 8 has a circular shape. The magnet portion 7 is fixed to an inner circumferential surface of the rotor 8 via an adhesive agent, for example. In the embodiment, the motor 1 is an outer rotor motor. That is, the rotor 8 with the magnet portion 7 held on the inner circumferential surface side surrounds the stator 4.

The rotary portion 3 is provided with the lid portion 9. The lid portion 9 covers an upper end of the rotor 8. The lid portion 9 is formed of, for example, aluminum. The lid portion 9 is provided with a lid main body portion 91, an attachment portion 92, a connection portion 93, and opening portions 94. The lid main body portion 91 is provided to have a circular plate-like shape. In a plan view, the outer edge of the lid main body portion 91 has an arc shape that is curved radially inward. The attachment portion 92 is positioned on the central portion of the lid main body portion 91. The attachment portion 92 has a columnar shape that extends in the axial direction, and the center thereof coincides with the central axis C. The attachment portion 92 protrudes in the vertical direction from upper and lower surfaces of the lid main body portion 91. The attachment portion 92 is provided with a cavity portion 92a that extends to an upper side from a lower end.

The connection portion 93 is provided to have a circular shape. The connection portion 93 is positioned below the lid main body portion 91 and is connected to the outer edge of the lid main body portion 91. The connection portion 93 is provided with an annular wall portion 93a that extends downward. The wall portion 93a is press-fitted into the rotor 8. Therefore, the lid portion 9 is fixed to the rotor 8. The opening portions 94 penetrate the lid main body portion 91 in the vertical direction. The three opening portions 94 are arranged at equal intervals in the circumferential direction. When the rotor 8 rotates, the lid portion 9 also rotates. When the lid portion 9 rotates, air is taken in via the opening portions 94.

The rotary portion 3 is provided with the shaft 10. The shaft 10 extends along the central axis C. An upper end portion of the shaft 10 is fitted into the cavity portion 92a. Therefore, the shaft 10 is fixed to the lid portion 9. The shaft 10 is rotatably supported by the upper and lower bearing portions 6. When the rotor 8 rotates, the shaft 10 rotates around the central axis C. The shaft 10 rotatably supports the rotor 8.

Note that, the rotary blade of the unmanned aircraft is attached to the attachment portion 92 on an upper surface side of the lid main body portion 91. The rotary blade may be attached to a lower end of the shaft 10 instead of the attachment portion 92. In this case, any configuration can be adopted as long as the shaft 10 protrudes downward further than the bracket 5. The rotary blade may be attached to the lower end of the shaft 10 in addition to the attachment portion 92.

When power is supplied to the coils 42 in the motor 1 configured as described above, magnetic flux is generated around the salient poles 412. In addition, torque in the circumferential direction is generated due to the effect of the magnetic flux between the salient poles 412 and the magnet portion 7. Therefore, the rotary portion 3 rotates around the central axis C relative to the stationary portion 2 and a rotary motion of the motor 1 is started. When supply of power to the coils 42 is stopped, rotation of the rotary portion 3 is stopped. Accordingly, the rotary motion of the motor 1 ends.

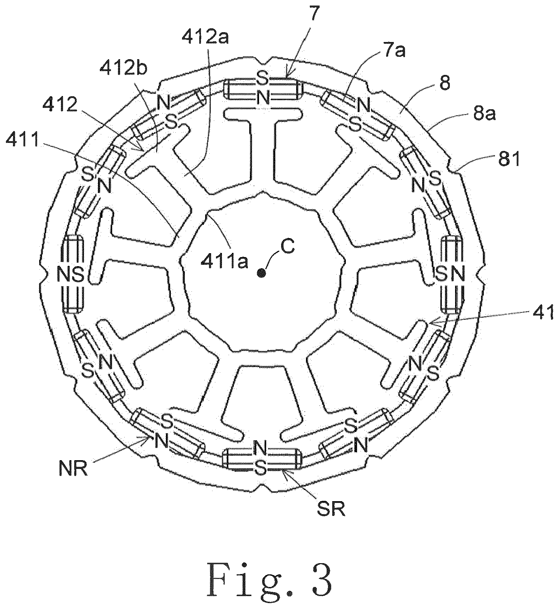

Fig. 3 is a plan view illustrating a relationship between the stator core 41, the magnet portion 7 and the rotor 8 of the motor 1 according to the embodiment of the invention. Fig. 3 is a view as seen from the upper side in the axial direction. As illustrated in Fig. 3, the stator core 41 is provided with the annular core back 411. The core back 411 extends in the axial direction. The plurality of salient poles 412 protrude radially outward from the core back 411 and tip end portions thereof face an inner circumferential portion of the magnet portion 7. The plurality of salient poles 412 are arranged at equal intervals in the circumferential direction. In the embodiment, the number of salient poles 412 is nine. The number of salient poles 412 may be appropriately changed. Specifically, each salient pole 412 is provided with a base portion 412a that extends radially outward from the core back 411 and on which a lead wire forming the coil 42 are wounded. Each salient pole 412 is provided with a tip end portion 412b that is disposed radially outward of the base portion 412a and extends in the circumferential direction.

As illustrated in Fig. 3, the plurality of magnet pieces 7a that are held on the inner circumferential surface side of the rotor 8 have the same shape. Specifically, each magnet piece 7a has a rectangular parallelepiped-like shape. The plurality of magnet pieces 7a are arranged at equal intervals in the circumferential direction. In the embodiment, twelve magnet pieces 7a are arranged at equal intervals in the circumferential direction. The number of magnet pieces 7a may be appropriately changed. A radially inner surface of each magnet piece 7a faces a radially outer end surface of each salient pole 412. One of an N-pole surface and an S-pole surface of each magnet piece 7a is on a radially outer side and the other of the N-pole surface and the S-pole surface of each magnet piece 7a is on a radially inner side. The N-pole surfaces and the S-pole surfaces of the plurality of magnet piece 7a are arranged to be alternately arranged in the circumferential direction. In other words, N-pole regions NR and S-pole regions SR of the magnet portion 7 are alternately arranged in the circumferential direction.

Note that, in a case where the magnet portion 7 is provided with an annular magnet, any configuration can be adopted as long as the N-pole regions and the S-pole regions are alternately arranged in the circumferential direction of the annular magnet. In addition, the magnet portion 7 can have any configuration as long as the N-pole regions and the S-pole regions are alternately arranged in the circumferential direction and each of the N-pole regions or each of the S-pole regions may be configured of the plurality of magnet pieces 7a instead of one magnet piece 7a. For example, the plurality of magnet pieces 7a having pole surfaces facing the same direction may be consecutively arranged at intervals in the circumferential direction such that the N-pole regions and the S-pole regions are formed.

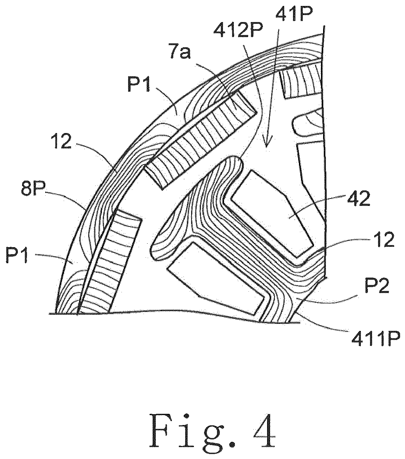

Fig. 4 is a schematic view for describing the magnetic flux formed by the magnet pieces 7a and the coils 42. Note that, a stator core 41P and a rotor 8P illustrated in Fig. 4 are partially different from the configuration in the embodiment. Lines of magnetic induction 12 from each magnet piece 7a reach a magnet piece 7a positioned nearby in the circumferential direction through the rotor 8P. On right and left sides of each magnet piece 7a in the circumferential direction, nearby magnet pieces 7a are present. For this reason, the lines of magnetic induction 12 from each magnet piece 7a branch into two directions of right and left directions with an approximately central portion of the magnet piece 7a in the circumferential direction as a boundary. As a result, as illustrated in Fig. 4, at a position in the rotor 8P that faces the central portion of each magnet piece 7a in the circumferential direction, the density of magnetic flux passing through the rotor 8P is low. The width of a portion P1, in which the density of magnetic flux passing through the rotor 8P is low, in the circumferential direction becomes narrower toward the radially inner side from the radially outer side.

When power is supplied to the coils 42, a magnetic field is generated and magnetic flux is generated in each salient pole 412P. The lines of magnetic induction 12 passing through the salient pole 412P reach a salient pole 412P positioned nearby in the circumferential direction through the core back 411P. On right and left sides of each salient pole 412P in the circumferential direction, nearby salient poles 412P are present. For this reason, the lines of magnetic induction 12 from each salient pole 412P branch into two directions of right and left directions with an approximately central portion of the salient pole 412P in the circumferential direction as a boundary. As a result, as illustrated in Fig. 4, at a position in an inner circumferential portion of each salient pole 412P that corresponds to the central portion of each salient pole 412P in the circumferential direction, the density of magnetic flux passing through the core back 411P is low. The width of a portion P2, in which the density of magnetic flux passing through the core back 411P is low, in the circumferential direction becomes narrower toward the radially outer side from the radially inner side. Note that, when power is supplied to the coils 42, the rotor 8P provided with the magnet portion 7 starts to rotate. Due to this and other factors, a portion of the core back 411P in which the density of magnetic flux is low periodically changes when the motor 1 is driven. At a position in the core back 411P that corresponds to the radially inner side of the central portion of each salient pole 412P in the circumferential direction, generally, the density of magnetic flux does not become high to an extent that the magnetic characteristics of the motor 1 are influenced.

The motor 1 according to the embodiment is designed to reduce the weights of the rotor 8 and the stator core 41 in consideration of distribution of the above-described magnetic flux density. Note that, a structure related to reduction in weight of the stator core 41 as described below may not be provided in some cases. The rotor 8 is provided with at least one of a recess portion that is provided on an outer circumferential surface and that is recessed toward the radially inner side and a hole portion that penetrates the rotor 8 in a direction from the outer circumferential surface to an inner circumferential surface. The recess portion and the hole portion radially face the central portions of the N-pole regions NR in the circumferential direction or the central portions of the S-pole regions SR in the circumferential direction. According to the configuration, it is possible to reduce the weight of the rotor 8 by cutting the above-described portion P1 in which the density of magnetic flux is low. Therefore, it is possible to reduce the weight while suppressing a decrease in magnetic characteristics of the motor 1. According to this configuration, it is possible to improve the heat dissipation properties of the motor 1 since it is possible to increase the surface area of an outer circumferential surface 8a of the rotor 8.

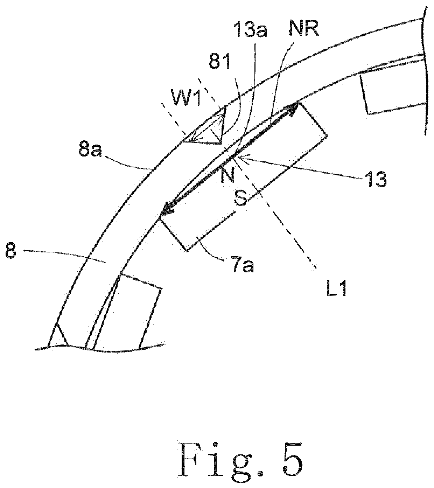

Fig. 5 is a schematic view for describing weight reduction of the rotor 8 according to the embodiment. In Fig. 5, a one-dot chain line L1 is a bisector that bisects the magnet piece 7a and the N-pole region NR in the circumferential direction. In the embodiment, as illustrated in Fig. 5, the rotor 8 is provided with a recess portion 81 that is provided on the outer circumferential surface 8a and that is recessed toward the radially inner side. The recess portion 81 radially faces the central portions 13 of the N-pole regions NR in the circumferential direction or the central portions 13 of the S-pole regions SR in the circumferential direction. In other words, the recess portion 81 radially faces a central portion 13 of the magnet piece 7a in the circumferential direction. In the embodiment, the rotor 8 is provided with only the recess portion 81 and is not provided with a hole portion. Fig. 5 illustrates a case where the recess portion 81 faces the N-pole region NR as an example.

Note that, as described above, the portion P1 in which the density of magnetic flux passing through the rotor 8P is low has a width in the circumferential direction. In consideration of this point, in the embodiment, the central portion 13 of each of pole regions NR and SR in the circumferential direction is a region that extends from a central position 13a in the circumferential direction and has a constant width in the circumferential direction and includes a position offset from the central position 13a of each of the pole regions NR and SR in the circumferential direction. That is, the recess portion 81 may face a position offset from the central position 13a of each of the pole regions NR and SR in the circumferential direction.

The width of the recess portion or the hole portion in the circumferential direction preferably becomes narrower toward the radially inner side. According to this configuration, the shape of the recess portion or the hole portion can be made similar to the shape of the portion in which the density of magnetic flux is low. Therefore, according to this configuration, it is possible to appropriately suppress a decrease in magnetic characteristics. In the embodiment, as illustrated in Fig. 5, the width W1 of the recess portion 81 in the circumferential direction becomes narrower toward the radially inner side. The recess portion 81 has a V-shape in a plan view as seen in the axial direction. The recess portion 81 may have another shape such as a U-shape in a plan view as seen in the axial direction. The width W1 of the recess portion 81 in the circumferential direction may be constant in the radial direction.

The recess portion or the hole portion preferably extends in the axial direction. According to this configuration, it is possible to cut the rotor 8 over a wide area and thus it is possible to further reduce the weight of the motor 1. According to this configuration, it is possible to improve the heat dissipation properties of the motor 1 by further increasing the surface area of the outer circumferential surface 8a of the rotor 8 by widening an area in which the recess portion or the hole portion is provided. As illustrated in Fig. 1, in the embodiment, the recess portion 81 extends in the axial direction. Specifically, the recess portion 81 extends from a lower end of the rotor 8 to an upper end of the rotor 8. The recess portion 81 may be provided only in a portion of an area from the lower end of the rotor 8 to the upper end of the rotor 8. A plurality of recess portions 81 may be provided at intervals in the axial direction. The plurality of recess portions 81 provided in the axial direction may have the same shape and may have different shapes. The recess portion 81 has a circular shape or the like in a plan view as seen in the radial direction and may be configured not to extend in the axial direction.

Preferably, the rotor 8 is provided with at least one of a plurality of the recess portions arranged at intervals in the circumferential direction and a plurality of the hole portions arranged at intervals in the circumferential direction. In addition, the plurality of recess portions and the plurality of hole portions are preferably symmetrically disposed with the central axis C interposed therebetween. According to this configuration, it is possible to cut the rotor 8 over a wide area and thus it is possible to further reduce the weight of the motor 1. According to this configuration, it is possible to improve the heat dissipation properties of the motor 1 by further increasing the surface area of the outer circumferential surface 8a of the rotor 8. Since the plurality of recess portions and the plurality of hole portions are symmetrically disposed, it is possible to achieve a good balance at the time of rotation of the rotor 8.

In the embodiment, as illustrated in Fig. 3, the rotor 8 is provided with the plurality of recess portions 81 arranged at intervals in the circumferential direction. Specifically, the rotor 8 is provided with the recess portions 81 that respectively face the central portions 13 of all of the magnet pieces 7a in the circumferential direction. The plurality of recess portions 81 have the same shape. The plurality of recess portions 81 are arranged at 30-degree intervals in the circumferential direction and are symmetrically disposed with the central axis C interposed therebetween.

Note that, the rotor 8 does not need to be provided with the recess portions 81 that respectively face all of the magnet pieces 7a. Even in this case, the plurality of recess portions 81 are preferably symmetrically disposed with the central axis C interposed therebetween. The plurality of recess portions 81 do not need to have the same shape. Even in this case, the plurality of recess portions 81 are preferably symmetrically disposed with the central axis C interposed therebetween.

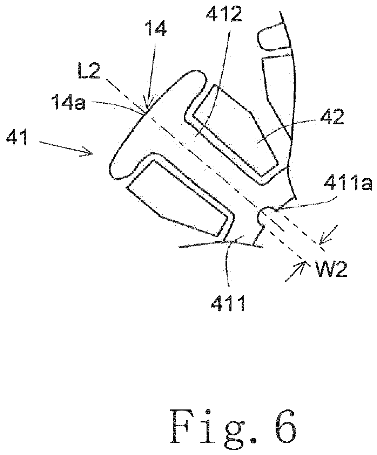

Fig. 6 is a schematic view for describing weight reduction of the stator core 41 according to the embodiment. In Fig. 6, a one-dot chain line L2 is a bisector that bisects the salient pole 412 in the circumferential direction. As illustrated in Fig. 6, the core back 411 is provided with a notch portion 411a that is provided on an inner circumferential surface and that is recessed toward the radially inner side. Since the notch portion 411a is provided, it is possible to reduce the weight of the motor 1 by reducing the weight of the stator core 41.

In the embodiment, a central portion 14 of the salient pole 412 in the circumferential direction is positioned radially outward of the notch portion 411a. Accordingly, it is possible to reduce the weight of the stator core 41 by cutting the above-described portion P2 in which the density of magnetic flux is low. Therefore, it is possible to reduce the weight while suppressing a decrease in magnetic characteristics of the motor 1.

Note that, as described above, the portion P2 of the stator core 41P in which the density of magnetic flux is low has a width in the circumferential direction. In consideration of this point, in the embodiment, the central portion 14 of the salient pole 412 in the circumferential direction is a region that extends from a central position 14a in the circumferential direction and has a constant width in the circumferential direction and includes a position offset from the central position 14a of the salient pole 412 in the circumferential direction. That is, on the radially outer side of the notch portion 411a, the central position 14a of the salient pole 412 in the circumferential direction may not be present.

The width W2 of the notch portion 411a in the circumferential direction preferably becomes narrower toward the radially outer side. Accordingly, the shape of the notch portion 411a can be made similar to the shape of the portion in which the density of magnetic flux is low. In order to reduce the weight of the stator core 41 as much as possible, the notch portion 411a preferably extends in the axial direction. The notch portion 411a preferably extends from a lower end of the core back 411 to an upper end of the core back 411. The notch portion 411a may be provided only in a portion of an area from the lower end of the core back 411 to the upper end of the core back 411. A plurality of notch portions 411a may be provided at intervals in the axial direction. The plurality of notch portions 411a provided in the axial direction may have the same shape and may have different shapes. The notch portion 411a has a circular shape or the like in a plan view as seen in the radial direction and may be configured not to extend in the axial direction.

As illustrated in Fig. 3, the stator core 41 is preferably provided with the plurality of notch portions 411a arranged at intervals in the circumferential direction. Accordingly, it is possible to further reduce the weight of the stator core 41. The plurality of notch portions 411a preferably have the same shape. The notch portions 411a are preferably disposed radially inward of all of the salient poles 412 and the notch portions 411a may be disposed radially inward only a portion of the salient poles 412.

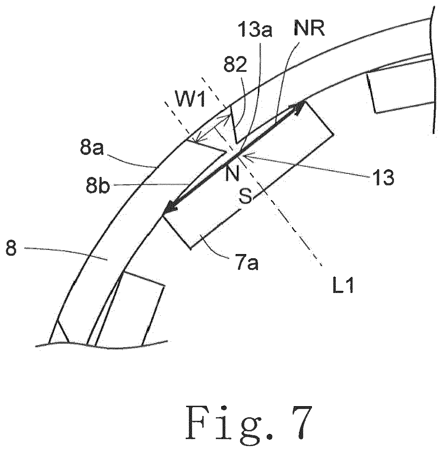

Fig. 7 is a schematic view for describing a first modification example. As illustrated in Fig. 7, the rotor 8 may be configured to be provided with only a hole portion 82 penetrating the rotor 8 in a direction from the outer circumferential surface 8a to an inner circumferential surface 8b instead of the recess portion 81. The hole portion 82 radially faces the central portion 13 of the N-pole region NR in the circumferential direction or the central portion 13 of the S-pole region SR in the circumferential direction. Fig. 7 illustrates a case where the hole portion 82 faces the N-pole region NR as an example. Since the hole portion 82 is provided, it is possible to cut a larger portion of the rotor 8 in comparison with a case where the recess portion 81 is provided. Therefore, it is possible to reduce the weight of the rotor 8 in comparison with a case where only the recess portion 81 is provided.

The hole portion 82 preferably has the same configuration as the recess portion 81 described above. For example, the width W1 of the hole portion 82 in the circumferential direction preferably becomes narrower toward the radially inner side. The hole portion 82 preferably extends in the axial direction. The rotor 8 is preferably provided with a plurality of hole portions 82 arranged at intervals in the circumferential direction. In this case, the plurality of hole portions 82 are preferably symmetrically disposed with the central axis C interposed therebetween.

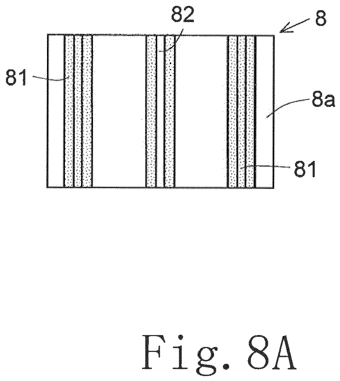

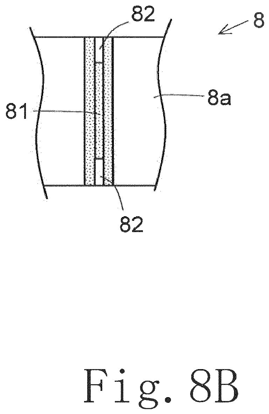

Figs. 8A and 8B are schematic views for describing a second modification example. Figs. 8A and 8B are side views of the rotor 8. As illustrated in Figs. 8A and 8B, the rotor 8 may be configured to be provided with both of the recess portion 81 that is provided on the outer circumferential surface 8a and that is recessed in the radial direction and the hole portion 82 that penetrates the rotor 8 in a direction from the outer circumferential surface 8a to the inner circumferential surface 8b. The recess portion 81 and the hole portion 82 radially face the central portion 13 of the N-pole region NR in the circumferential direction or the central portion 13 of the S-pole region SR in the circumferential direction. In a case where both of the recess portion 81 and the hole portion 82 are provided, it is possible to reduce the weight of the rotor 8 in comparison with a case where only the recess portion 81 is provided.

In a configuration illustrated in Fig. 8A, the rotor 8 is provided with the recess portions 81 and the hole portion 82 that are alternate in the circumferential direction. In Fig. 8A, the recess portions 81 and the hole portion 82 extend in the axial direction from the lower end of the rotor 8 to the upper end of the rotor 8. However, this configuration may be appropriately changed. For example, at least one of the recess portions 81 and the hole portion 82 may be provided to have a circular shape in a plan view as seen in the radial direction and may be configured not to extend in the axial direction. The rotor 8 is preferably provided with the plurality of recess portions 81 arranged at intervals in the circumferential direction and the plurality of hole portions 82 arranged at intervals in the circumferential direction. The plurality of recess portions 81 and the plurality of hole portions 82 are preferably symmetrically disposed with the central axis C interposed therebetween. The width W1 of the recess portions 81 and the hole portion 82 in the circumferential direction preferably becomes narrower toward the radially inner side. However, the width W1 of at least one of the recess portions 81 and the hole portion 82 in the circumferential direction may not become narrower toward the radially inner side.

In a configuration illustrated in Fig. 8B, the rotor 8 is provided with the recess portion 81 and the hole portions 82 in the axial direction. Specifically, upper and lower portions of the rotor 8 is provided with the hole portions 82 and the central portion of the rotor 8 is provided with the recess portion 81. The recess portion 81 and the hole portions 82 arranged in the axial direction may be separated from each other and may be connected to each other as illustrated in Fig. 8B. The recess portion 81 and the hole portions 82 preferably extend in the axial direction. However, at least one of the recess portion 81 and the hole portions 82 may not extend in the axial direction. Even in the case of the configuration illustrated in Fig. 8B, the rotor 8 is preferably provided with the plurality of recess portions 81 arranged at intervals in the circumferential direction and the plurality of hole portions 82 arranged at intervals in the circumferential direction. The plurality of recess portions 81 and the plurality of hole portions 82 are preferably symmetrically disposed with the central axis C interposed therebetween. The width W1 of the recess portion 81 and the hole portions 82 in the circumferential direction preferably becomes narrower toward the radially inner side. However, the width W1 of at least one of the recess portion 81 and the hole portions 82 in the circumferential direction may not become narrower toward the radially inner side.

Features of the above-described preferred embodiments and the modifications thereof may be combined appropriately as long as no conflict arises.

While preferred embodiments of the present invention have been described above, it is to be understood that variations and modifications will be apparent to those skilled in the art without departing from the scope and spirit of the present invention. The scope of the present invention, therefore, is to be determined solely by the following claims.

The invention can be used for an outer rotor motor in which a rotor is disposed on an outer circumferential side of a stator.

## Claims

1. An outer rotor motor (1) comprising:
a stationary portion (2) provided with a stator (4) that annularly surrounds a central axis (C) that extends in a vertical direction; and
a rotary portion (3) provided with a magnet portion (7) that is disposed radially outward of the stator (4),
wherein the rotary portion (3) is provided with a rotor that is a magnetic material with the magnet portion (7) held on an inner circumferential surface side thereof,
wherein an N-pole region (NR) and an S-pole region (SR) of the magnet portion (7) are alternately arranged in a circumferential direction,
wherein the rotor (8) is provided with at least one of a recess portion (81) that is provided on an outer circumferential surface (8a) and that is recessed toward a radially inner side and a hole portion (82) that penetrates the rotor (8) in a direction from the outer circumferential surface (8a) to an inner circumferential surface (8b), and
wherein the recess portion (81) and the hole portion radially face a central portion (13) of the N-pole region (NR) in the circumferential direction or a central portion (13) of the S-pole region (SR) in the circumferential direction.

2. The motor (1) according to Claim 1,
wherein the recess portion (81) or the hole portion (82) extends in an axial direction.

3. The motor (1) according to Claim 1 or 2,
wherein the rotor (8) is provided with at least one of a plurality of the recess portions (81) arranged at intervals in the circumferential direction and a plurality of the hole portions (82) arranged at intervals in the circumferential direction, and
wherein the plurality of recess portions (81) and the plurality of hole portions (82) are symmetrically disposed with the central axis (C) interposed therebetween.

4. The motor (1) according to any one of Claims 1 to 3,
wherein the width (W1) of the recess portion (81) or the hole portion (82) in the circumferential direction becomes narrower toward the radially inner side.

5. The motor (1) according to any one of Claims 1 to 4,
wherein the stator (4) is provided with a stator core (41),
wherein the stator core (41) is provided with
an annular core back (411), and
a plurality of salient poles (412) that protrude radially outward from the core back (411) and of which tip end portions face an inner circumferential portion of the magnet portion (7), and
wherein the core back (411) is provided with a notch portion (411a) that is provided on an inner circumferential surface and that is recessed toward a radially outer side.

6. The motor (1) according to Claim 5,
wherein a central portion (14) of each of the salient poles (412) in the circumferential direction is positioned radially outward of the notch portion (411a).

7. The motor (1) according to any one of Claims 1 to 6,
wherein the magnet portion (7) is provided with a plurality of magnet pieces (7a), and
wherein the plurality of magnet pieces (7a) are arranged such that an N-pole and an S-pole are alternately arranged in the circumferential direction.
